# EUROPEAN PATENT SPECIFICATION

(11) **EP 4 184 176 B1**
(45) Date of publication and mention of the grant of the patent: **24.07.2024**
(21) Application number: 21208700.1
(22) Date of filing: 17.11.2021
(51) Int. Cl.: G01N 35/10, B01L 3/02

(54) **METHOD FOR DETECTION OF A BOTTOM OF AT LEAST ONE WELL**
VERFAHREN ZUR DETEKTION EINES BODENS MINDESTENS EINES SCHACHTS
PROCÉDÉ DE DÉTECTION D'UN FOND D'AU MOINS UN PUITS

(43) Date of publication of application: 24.05.2023
(73) Proprietor: Roche Diagnostics GmbH, 68305 Mannheim (DE); F. Hoffmann-La Roche AG, 4070 Basel (CH)
(72) Inventor: Birckner, Patrick, 6343 Rotkreuz (CH); Durrer, Simon, 6343 Rotkreuz (CH); Ettel, Christian, 6343 Rotkreuz (CH); Gut, Raphael, 6343 Rotkreuz (CH); Hermann, Pius, 6343 Rotkreuz (CH); Meier, Alexander, 6343 Rotkreuz (CH); Spescha, Roger, 6343 Rotkreuz (CH); Wang, Pengfei, 6343 Rotkreuz (CH)
(74) Representative: Altmann Stößel Dick Patentanwälte PartG mbB

(56) References cited:
- US-A- 4 715 413
- US-A- 5 455 008
- US-B2- 10 564 172
- US-B2- 10 946 372

## Description

### Technical Field

The present invention relates to a method for detection of a bottom of at least one well and a pipetting device for performing the method. The invention further relates to a laboratory instrument for processing and/or analyzing a sample comprising the pipetting device. Further, the invention relates to a computer program and a computer-readable storage medium for performing the method. The method and devices may specifically be used in the field of medical or chemical laboratories, in particular in the field of automated in vitro diagnostic (IVD) sample processing. Other fields of application of the present invention, however, are feasible.

### Background art

In the field of medical or chemical laboratories, pipetting devices are often used for automatic sample handling. Specifically, pipetting devices may be used for transferring samples, specifically samples of a human body, like blood, urine, saliva, interstitial fluid or other body fluids, reagents or controls from a first vessel to a second vessel by means of an aspirating and/or dispensing operation. Modern apparatus for processing samples of this kind are largely fully automatic in operation.

For automatic operation of the pipetting devices, generally, a detection of the vessels may be required. As an example, EP 0 223 758 B1, JPH01097865A, EP 2 350 676 B1, US 2019/0324050 A1, WO 2019/017964 A1, EP 3 173 793 A1, WO 2012/129105 A1, US 2009/0130745 A1, WO 2005/121746 A1, EP 3 376 235 A1, EP 2 481 481 A1 and EP 3 517 974 A1 describe pipetting devices and/or pipetting methods with automatic detection means Further, US 5,455,008 A discloses a method for detecting the well bottom in a multiwell plate used in a DNA sequencing system. Plural pipetting tips are held by a pipetting head that is connected to a force sensor. In US'008, well bottom detection takes place by monitoring for a decrease in force; the initial force is defined by the freely hanging pipette tips and this force is relieved when the tips contact the well bottoms.

Despite the advantages achieved by known methods and devices, several technical challenges remain. For example, automatic vessel detection may be time-consuming, specifically when using vessel positions several times. Further, in general, it may be required to perform a high number of force-controlled movements to ensure sufficient reliability of the automatic vessel detection. Moreover, potential risks of pipetting tip closure at a well bottom may occur when minimizing a dead volume in the well.

### Problem to be solved

It is therefore desirable to provide methods and devices which at least partially address above-mentioned technical challenges. Specifically, a method for detection of a bottom of at least one well, a pipetting device and a laboratory instrument shall be proposed which allow a time-effective detection of a bottom of at least one well with high reliability and accuracy.

### Summary

This problem is addressed by a method for detection of a bottom of at least one well, a pipetting device and a laboratory instrument with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

According to the invention, a method for detection of a bottom of at least one well of a multiwell plate for a pipetting device is proposed. The pipetting device comprises at least one pipetting head configured for being coupled to a plurality of pipetting tips. The method comprises using at least one force sensor configured for measuring a resistance force depending on a force on a pipetting tip exerted by the bottom.

The term "pipetting device" as used herein is a broad term and is to be given its ordinary and customary meaning to a person of ordinary skill in the art and is not to be limited to a special or customized meaning. The term specifically may refer, without limitation, to a device or system configured for performing at least one pipetting step comprising at least one transport and/or transfer of liquid or other materials such as dry powder. The pipetting device may be configured for performing at least one pipetting step such as aspiration and/or dispensing. The pipetting device may comprise the pipetting head and at least one pipetting tip or may be connectable to at least one pipetting tip. The pipetting device is configured for performing at least one pipetting procedure on the multiwell plate. The term "pipetting procedure" as used herein is a broad term and is to be given its ordinary and customary meaning to a person of ordinary skill in the art and is not to be limited to a special or customized meaning. The term specifically may refer, without limitation, to at least one pipetting step and/or a sequence of pipetting steps.

The pipetting device may be an automated pipetting device. Thus, the pipetting procedure may be performed automatically, e.g. without user interaction. However, the pipetting procedure may comprise steps which require manual action such as loading of consumables.

The term "pipetting head" as used herein is a broad term and is to be given its ordinary and customary meaning to a person of ordinary skill in the art and is not to be limited to a special or customized meaning. The term specifically may refer, without limitation, to at least one mechanical component designed for transport and/or transfer of liquid or other materials such as dry powder. The pipetting head may comprise at least one pump and/or pump system. For example, the pump may be a micro annular gear pump.

The term "pipetting tip" as used herein is a broad term and is to be given its ordinary and customary meaning to a person of ordinary skill in the art and is not to be limited to a special or customized meaning. The term specifically may refer, without limitation, to disposable pipetting tips, which may be used only with a single pipetting process, and reusable pipetting tips, which may be used with more than one pipetting process. Disposable pipetting tips are usually made of plastics and are disposed after the pipetting process. Reusable pipetting tips may be designed as pipetting needles and are usually made of metal or any other material suitable for use with the respective liquids.

The term "coupled to" as used herein is a broad term and is to be given its ordinary and customary meaning to a person of ordinary skill in the art and is not to be limited to a special or customized meaning. The term specifically may refer, without limitation, to a releasable coupling process of a pipetting tip to the pipetting head, e.g. via a coupling unit, as well as a permanent coupling of the pipetting tip to the coupling unit. Regarding the latter case, a pipetting tip may be permanently coupled such as screwed to the coupling unit except for an exchange caused by damage or for maintenance purposes. The pipetting head may either couple disposable pipette tips or may comprise pipetting needles, and which can aspirate and dispense samples and/ or reagents necessary for performing sample processing steps. The pipetting device may have one pipette tip or needle for aspirating and/or dispensing one sample or reagent or a combination thereof. The pipetting device may have multiple pipette tips or needles for aspirating and/or dispensing multiple samples or reagents or a combination thereof at the same time.

The pipetting device may be an element of at least one laboratory instrument for processing a sample. The term "laboratory instrument" as used herein is a broad term and is to be given its ordinary and customary meaning to a person of ordinary skill in the art and is not to be limited to a special or customized meaning. The term specifically may refer, without limitation, to any device configured for performing sample or sample vessel processing steps. For example, the laboratory instrument may be a clinical diagnostic analyzer. The pipetting device may be arranged at a pipetting station of the laboratory. The pipetting device may be placed. The laboratory instrument may comprise a plurality of pipetting stations.

The laboratory instrument may be one or more of a pre-analytical, an analytical, or an post-analytical instrument. A pre-analytical instrument can usually be used for the preliminary processing of samples or sample vessels. An analytical instrument can be designed, for example, to use a sample or part of the sample and a reagent in order to produce a measurable signal, on the basis of which it is possible to determine whether the analyte is present, and if desired in what concentration. A post-analytical instrument can usually be used for the post-processing of samples like the archiving of samples. The laboratory instrument may comprise a pipetting device for pipetting a sample and further devices such as a sorting device for sorting samples or sample vessels, a cap removal device for removing caps or closures on sample vessels, a cap fitting device for fitting caps or closures on sample vessels, an aliquoting device for aliquoting samples, a centrifuging device for centrifuging samples, an analyzing device for analyzing a sample, a heating device for heating a sample, a cooling device for cooling a sample, a mixing device for mixing a sample, a separation device for isolating an analyte of the sample, a storing device for storing samples, an archiving device for archiving samples, a sample vessel type determination device for determining a sample vessel type, a sample quality determination device for determining a sample quality.

The term "sample" as used herein is a broad term and is to be given its ordinary and customary meaning to a person of ordinary skill in the art and is not to be limited to a special or customized meaning. The term specifically may refer, without limitation, to a material suspected of containing an analyte of interest. The sample can be derived from any biological source, such as a physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The sample can be pretreated prior to use, such as preparing plasma from blood, diluting viscous fluids, lysis or the like; methods of treatment can involve filtration, distillation, concentration, inactivation of interfering components, and the addition of reagents. A sample may be used directly as obtained from the source or following a pretreatment to modify the character of the sample, e.g. after being diluted with another solution or after having being mixed with reagents e.g. to carry out one or more diagnostic assays like e.g. clinical chemistry assays, immunoassays, coagulation assays, nucleic acid testing, etc.. The term "sample" as used herein is therefore not only used for the original sample but also relates to a sample which has already been processed such as pipetted, diluted, mixed with reagents, enriched, having been purified, having been amplified and the like. As used herein, the term "analyte" may refer to the compound or composition to be detected or measured.

The term "processing a sample" as used herein is a broad term and is to be given its ordinary and customary meaning to a person of ordinary skill in the art and is not to be limited to a special or customized meaning. The term specifically may refer, without limitation, to any treatment of the sample. For example, the processing may comprise one or more of transferring, aliquoting, isolating, purifying, incubating, reacting a sample or combining a reagent with a sample. The term "reagent" as used herein is a broad term and is to be given its ordinary and customary meaning to a person of ordinary skill in the art and is not to be limited to a special or customized meaning. The term specifically may refer, without limitation, to a composition required for treatment of a sample. Reagents may be any liquid, e.g. a solvent or chemical solution, which needs to be mixed with a sample and/or other reagent in order e.g. for a reaction to occur, or to enable detection. A reagent may be for example a diluting liquid, including water, it may comprise an organic solvent, it may comprise a detergent, it may be a buffer. Reagents may also be dry reagents adapted e.g. to be dissolved by a sample, another reagent or a diluting liquid. A reagent in the more strict sense of the term may be a liquid solution containing a reactant, typically a compound or agent capable e.g. of binding to or chemically transforming one or more analytes present in a sample. Examples of reactants are enzymes, enzyme substrates, conjugated dyes, protein-binding molecules, nucleic acid binding molecules, antibodies, chelating agents, promoters, inhibitors, epitopes, antigens, etc..

The term "multiwell plate" as used herein is a broad term and is to be given its ordinary and customary meaning to a person of ordinary skill in the art and is not to be limited to a special or customized meaning. The term specifically may refer, without limitation, to any plate-shaped device configured to permanently or temporarily store a small amount of a fluid. A small amount in this respect is to be understood as a quantity of fluid in the range of nl to ml such as 10 nl to 100 ml, preferably 0.1 µl to 10 ml and even more preferably 0.1 µl to 5 ml. Basically, the design of the multiwell plate may depend on the respective application of the laboratory instrument. The multiwell plate may be designed as a device for storing a single fluid sample or a plurality of fluid samples. Similarly, the geometry of a respective storage area of the multiwell plate may depend on the respective application of the multiwell plate. The storage area may be designed as a well, channel, depression, recess or the like. For example, the multiwell plate may comprise a plurality of wells. The term "multiwell plate" as used herein may refers to a flat plate with multiple "wells" used as small test tubes. Such a multiwell plate is also known as microtiter plate. The microplate has become a standard tool in analytical research and clinical diagnostic testing laboratories. A very common usage is in the enzyme-linked immunosorbent assay (ELISA), the basis of most modern medical diagnostic testing in humans and animals. A multiwell plate typically has 6, 24, 96, 384 or 1536 sample wells arranged in a 2:3 rectangular matrix. Some microplates have even been manufactured with 3456 or 9600 wells, and an "array tape" product has been developed that provides a continuous strip of microplates embossed on a flexible plastic tape. Each well of a microplate typically holds somewhere between tens of picolitres to several millilitres of liquid. They can also be used to store dry powder or as racks to support glass tube inserts. Wells can be either circular or square. For compound storage applications, square wells with close fitting silicone cap-mats are preferred. Microplates can be stored at low temperatures for long periods, may be heated to increase the rate of solvent evaporation from their wells and can even be heat-sealed with foil or clear film. Microplates with an embedded layer of filter material were also developed, and today, there are microplates for just about every application in life science research which involves filtration, separation, optical detection, storage, reaction mixing, cell culture and detection of antimicrobial activity. For example, the multiwell plate may be a processing plate. The processing plate may be configured for undergoing at least one sample processing step. The sample processing may comprise one or more of sample specific steps, aliquoting, heating, cooling, magnetic separation, mixing, washing, elution, diluting, chemical reacting, lysing samples, capturing nucleic acids, releasing nucleic acids, extracting nucleic acids or the like. For example, the multiwell plate may be an AD plate. The AD plate may be configured for undergoing at least one preparation for subsequent analysis. After being prepared the AD plate may comprise the sample processed and purified at the end with at least one reagent.

The well of the multiwell plate may comprise at least one receptacle which is designed for containing a content received in the receptacle. The well extends downwards from a surface of the multiwell plate. The well may have an elongated shape. The well may have a cylindrical shape such as a tube. However, embodiments of the well having a shape deviating from a cylindrical shape may be possible. The well comprises a bottom. The term "bottom" as used herein is a broad term and is to be given its ordinary and customary meaning to a person of ordinary skill in the art and is not to be limited to a special or customized meaning. The term specifically may refer, without limitation, to a closure of the receptacle. The bottom may generally have an arbitrary shape such as a round shaped bottom, e.g. an U-bottom, a conically shaped bottom, e.g. a V-bottom, a flat bottom, or a flat bottom with curved edges. Other shapes may be possible, too.

The wells of the multiwell plate may form an array or matrix with rows and columns. The array or matrix may be rectangular having m rows and n columns, with m, n, independently, being positive integers. Entries of the array or matrix are denoted herein logical positions. The wells may be arranged at logical positions in the multiwell plate.

The term "detection of the bottom" as used herein is a broad term and is to be given its ordinary and customary meaning to a person of ordinary skill in the art and is not to be limited to a special or customized meaning. The term specifically may refer, without limitation, to determining depth of the well. The detection of the bottom may comprise determining a position of the bottom in a coordinate system of the pipetting device and/or relative to the surface of the multiwell plate. The pipetting device may comprise a three-dimensional rectangular coordinate system comprising a first direction (also denoted as x-) direction, y (also denoted as y-) direction, and a third direction (also denoted as z-) direction which are perpendicularly aligned with respect to each other, with the first and second directions (x, y) spanning a plane and the third direction (z) being perpendicularly aligned with respect to the plane. The first and second directions (x, y) can span a horizontal plane and the third direction (z) can be vertically aligned (direction of fall). The horizontal plane may be the plane of the surface of the multiwell plate. The detection of the bottom may comprise determining a z-coordinate of the bottom and/or a relative distance to the surface of the multiwell plate along the z-direction.

The term "force sensor" as used herein is a broad term and is to be given its ordinary and customary meaning to a person of ordinary skill in the art and is not to be limited to a special or customized meaning. The term specifically may refer, without limitation, to a sensor configured for converting a load into an electrical output signal, also denoted as sensor signal. The sensor signal may be a raw sensor signal or a preprocessed sensor signal. The force sensor may comprise a load cell configured for generating a sensor signal proportional to the resistance force exerted on the pipetting tip. For example, the load cell may be a strain-gauge beam arrangement. The force sensor may be arranged within the pipetting head.

One or more additional method steps may be present which are not listed. Further, one, more than one or even all of the method steps may be performed repeatedly.

The method according to the invention comprises the following steps:
a) measuring the resistance force during movement of one of the pipetting tips from a start position downstream towards the bottom of the well and stopping the movement at a bottom position, wherein the bottom position is a position where a predefined resistance force is reached;
b) storing the bottom position together with a corresponding logical position of the well in the multiwell plate in at least one database.

The term "start position" as used herein is a broad term and is to be given its ordinary and customary meaning to a person of ordinary skill in the art and is not to be limited to a special or customized meaning. The term specifically may refer, without limitation, to an initial position, e.g. a z-coordinate, of the pipetting tip before performing the pipetting procedure. The term "downstream" as used herein is a broad term and is to be given its ordinary and customary meaning to a person of ordinary skill in the art and is not to be limited to a special or customized meaning. The term specifically may refer, without limitation, to a direction along the z-axis, e.g. in direction of fall.

The predefined resistance force, where the movement of the pipetting tip is stopped, may be in the range of from 10 to 120 N, specifically in the range of from 10 to 96 N, more specifically may be 20 N.

The movement of the pipetting tip may be controlled by at least one control unit. The term "control unit" as used herein is a broad term and is to be given its ordinary and customary meaning to a person of ordinary skill in the art and is not to be limited to a special or customized meaning. The term specifically may refer, without limitation, to an arbitrary device or system configured for performing the named operations, preferably by using at least one data processing device and, more preferably, by using at least one processor and/or at least one application-specific integrated circuit. Thus, as an example, the at least one control unit may comprise at least one data processing device having a software code stored thereon comprising a number of computer commands. The control unit may provide one or more hardware elements for performing one or more of the named operations and/or may provide one or more processors with software running thereon for performing one or more of the named operations. The control unit may comprise one or more programmable devices such as one or more computers, application-specific integrated circuits (ASICs), Digital Signal Processors (DSPs), or Field Programmable Gate Arrays (FPGAs). Additionally or alternatively, however, the control unit may also fully or partially be embodied by hardware.

The term "processor" or "processing device" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math co-processor or a numeric co-processor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) and/or one or more tensor processing unit (TPU) and/or one or more chip, such as a dedicated machine learning optimized chip, or the like. The processor specifically may be configured, such as by software programming, for performing one or more evaluation operations.

The bottom position together with a corresponding logical position of the well in the multiwell plate is stored in the at least one database. This may allow mapping the bottom positions to the logical positions of the multiwell plate. The term "database" as used herein is a broad term and is to be given its ordinary and customary meaning to a person of ordinary skill in the art and is not to be limited to a special or customized meaning. The term specifically may refer, without limitation, to an organized collection of data, generally stored and accessed electronically from a computer or computer system. The database may comprise or may be comprised by a data storage device. The database may comprise at least one database management system, comprising a software running on a computer or computer system, the software allowing for interaction with one or more of a user, an application or the database itself, such as in order to capture and analyze the data contained in the database. The database management system may further encompass facilities to administer the data base. The database, containing the data, may, thus, be comprised by a data base system which, besides the data, comprises one or more associated applications.

The method may be performed automatically. The term "automatically" as used herein is a broad term and is to be given its ordinary and customary meaning to a person of ordinary skill in the art and is not to be limited to a special or customized meaning. The term specifically may refer, without limitation, to a process which is performed completely by means of at least one computer and/or computer network and/or machine, in particular without manual action and/or interaction with a user. The method may be computer-implemented. The method may, however, comprise manual action such as loading of consumables and the like. The control unit may be configured for executing the method according the present invention, such as steps a) and b).

The method may be performed during aspiration, and/or sip and spit, specifically during mixing, and/or dispensing. The aspiration may comprise drawing up the content of a well. The dispensing may comprise delivering a content for a well. The term "dispensing" may refer to "direct dispensing". The term "sip and spit" may refer to sip and spit dispensing, e.g. an intermediate transport mechanism for dispensing. The sip and spit, for example, may comprise aspirating a liquid from a container and then releasing the liquid onto the well. The sip and spit may specifically be performed for the purpose of mixing samples, reagents and/or the like.

For example, the method may performed during aspiration and/or sip and spit. The method may comprise subsequent to step a) moving the pipetting tip upwards until the resistance force has decreased to a predefined residual force and moving the pipetting tip upwards with a predefined distance to its final position for aspiration and/or sip and spit. The pipetting tip may contact the bottom of the well and the resistance force may start to increase. Subsequently, the pipetting tip and/or the well may be flexing until the predefined resistance force is reached. Then the pipetting tip may be moved upwards until the resistance force has decreased to the predefined residual force. The pipetting tip and/or the well may be unflexing until the predefined residual force is reached. The predefined residual force may be in the range of from 1 to 20 N, specifically in the range of from 4 to 10 N. The predefined distance may be an offset. The detected bottom may be stored for future use. The final position may be reached within an imprecision of ± 0.25 mm. The proposed method may allow dealing with hardware and consumable intolerances which can be > 1 mm. The proposed method can be advantageous when a residual volume in the well has to be minimized, e.g. < 7 µl. The proposed method may also guarantee that the pipette tip does not touch the bottom and that a tip end remains fully open for liquid operations.

For example, the method may be performed during dispense. The force sensor may be used to detect the bottom of the well. In a first step, the pipetting tip may be moved downwards to the bottom of the well. When there is contact with the bottom, the resistance force starts to increase. The movement is stopped when a predefined resistance force is reached. This is the final position for dispense. The detected bottom may be stored for future use. The proposed method may allow dealing with hardware and consumable intolerances which can be > 1mm. The proposed method may guarantee that the pipetting tip is in contact with the bottom for liquid operation. It is important to have an airtight connection, so no foam can escape during liquid operation.

The method may comprise considering, specifically reusing, the stored bottom position for at least one subsequent pipetting procedure, e.g. for one or more of subsequent aspiration, dispensing, waste dispensing, sip and spit. The method may comprise determining whether a bottom position is available for a logical position in the database. In case a bottom position is available, the method may proceed with a subsequent pipetting procedure, otherwise method steps a) to b) are performed. The detected bottoms for aspirate, and/or sip and spit and/or dispense may be stored and reused. For every new consumable, e.g. new multiwell plate and/or pipetting tip, the bottom may be detected again and will be used multiple times until the consumables are changed again. The storing may allow that the bottom position can be reused several times. This may allow saving time, since detecting the bottom is slower then moving directly to a given position. The time saving may be of several seconds per liquid handling operation.

For example, the control unit and/or a user may be configured for executing the method according to the present invention, when for a pipetting procedure a "bottom detection" function is selected. In a first step, the control unit may determine if a value for the bottom is already available in the database. In case no value for the bottom is available, e.g. for the first aspiration, the control unit and/or the user may select a function for detecting the bottom with additional moving the pipetting tip after the detection with a value for the predefined distance. Then the requested command may be executed by the control unit. The received value may be stored within a map with a key for the logical position and the value for the bottom. In case the value for the bottom is available in the database, within the map a key with the logical position is found. Then the command for the pipetting procedure can be directly executed using the bottom value and/or a sum of the value for the bottom and the predefined distance. After putting the pipetting tips down, the map may be cleaned (for a next run).

The method may comprise surveillance of the force sensor. The term "surveillance of the force sensor" as used herein is a broad term and is to be given its ordinary and customary meaning to a person of ordinary skill in the art and is not to be limited to a special or customized meaning. The term specifically may refer, without limitation, to monitoring of a behavior of the force sensor, specifically for ensuring reliability and/or precision. The force sensor may be moved to a defined position where the force sensor experiences at least one resistance force generated from at least one mechanical spring. For example, two different forces may be applied to the force sensor. For example, the force sensor may be checked for two different forces, e.g. 27 N and 57 N. The surveillance may comprise checking precision of about +/- 10 N.

The laboratory instrument may comprise at least one force control check station configured for surveillance of the force sensor. The laboratory instrument may comprise a plurality of force control check stations, e.g. at different modules. This may allow defining more precisely allowed tolerances for the force sensor.

The force control check station may be fixedly installed in the laboratory instrument. The term "fixedly installed" as used herein is a broad term and is to be given its ordinary and customary meaning to a person of ordinary skill in the art and is not to be limited to a special or customized meaning. The term specifically may refer, without limitation, to integrated into the laboratory instrument and/or non-exchangeable by a user. The force control check station may be arranged at a fixed position of the laboratory instrument. The force control check station may be part of a working surface of the laboratory instrument and/or may be arranged such that it can interact with a specific element of the working surface of the laboratory instrument. However, additionally or alternatively, embodiments are feasible in which the force control check station may be a temporarily integrated element of the laboratory instrument. As used herein, the term "working surface" is a broad term and is to be given its ordinary and customary meaning to a person of ordinary skill in the art and is not to be limited to a special or customized meaning. The term specifically may refer, without limitation, to a plate mounted within the laboratory instrument which represents the actual surface on which sample, sample vessel, reagent and/ or reagent vessel processing steps of the laboratory instrument are carried out. For this purpose, the working surface is provided with embedded compartments for accommodating consumables, sample processing devices, waste containers, activation devices, and racks which are required for carrying out the sample, sample vessel, reagent and/ or reagent vessel processing steps. The working surface may comprise one single piece and can be made of any suitable material with sufficient rigidity (e.g. metal and/ or plastic). The working surface may have different shapes and forms to meet the requirements of the laboratory instrument.

The force control check station may be configured for exerting at least one resistance force on the force sensor generated from at least one mechanical spring. The force control check station may comprise at least one mechanical spring. For example, the force control check station may comprise a plurality of mechanical springs. For example, the force control check station may comprise a first plurality of mechanical springs having first elastic properties and a second plurality of springs having second elastic properties. The term "mechanical spring" as used herein is a broad term and is to be given its ordinary and customary meaning to a person of ordinary skill in the art and is not to be limited to a special or customized meaning. The term specifically may refer, without limitation, to an arbitrary shaped element having elastic properties. The elastic element may have linear elastic properties. The elastic element may be, in particular, at least one spring such as a coil spring. The deformation of the spring can be neglected.

Instead of plastic tips, a metallic tool, also denoted teach tool, may be used for surveillance of the force sensor.

The force control check station may be part of the laboratory instrument, so the check can be executed periodically and fully automated. The periodic check guaranties proper function of the force sensor. The use of a metallic tool instead of tips may increase the precision of the check.

For example, the force control check station may comprise a compartment configured for receiving a mounting plate. The mounting plate may have a teach tool support configured for receiving the teach tool. The term "compartment" as used herein is a broad term and is to be given its ordinary and customary meaning to a person of ordinary skill in the art and is not to be limited to a special or customized meaning. The term specifically may refer, without limitation, to a dedicated embedded element of the working surface of the laboratory instrument. The mounting plate may be spring loaded with respect to the working surface. For example, the mounting plate may be spring loaded with respect to the working surface using four mechanical springs. The mechanical springs may have identical elastic properties. The mechanical springs may be arranged such that uniform force can be exerted to the teach tool. The force control check station may comprise a spring loaded intermediate plate. The intermediate plate may be spring loaded with respect to the working surface using four further mechanical springs. The further mechanical springs may have identical elastic properties. The further mechanical springs may have different elastic properties than the mechanical springs of the mounting plate. The further mechanical springs may be arranged such that uniform force can be exerted to the teach tool. The intermediate plate may be arranged below the mounting plate, e.g. between the working surface and the mounting plate. The intermediate plate may be designed such that it becomes effective at a certain distance (depth). Thus, it may be possible to exert at two different distances two different forces to the teach tool.

For example, a procedure at the force control check station may be as follows. The teach tool may be placed in the spring loaded mounting plate (parking position). The pipetting head may couple to the teach tool. The force control check station, in particular the pipetting head, may approach to at least one first depth value, e.g. -1 mm, such that a resistance force is built up via the spring or springs of the force control check station. The minus sign may denote that the direction of movement is downwards. The force sensor may measure the force. The control unit may compare the measured value to at least one expected value. The force control check station may approach at least one second depth value, e.g. -2.5 mm, at which the intermediate plate becomes effective. The force sensor may measure the force. The control unit may compare the measured value to at least one expected value.

The force control check station may be configured for providing control points for a force-distance measurement. The pipetting station may be configured for providing a force-distance function for the pipetting head, e.g. 100 N with a defined distance, or an additional second defined force N. As outlined above, the surveillance may comprise approaching two different depths thereby exerting two different forces. The control unit may be configured for interpolating a line through a first point (without a force), first depth value and second depth value thereby determining goodness of the curve.

The control unit may be configured for determining if a deviation from the expected value is within predefined tolerances. For example, the predefined tolerances may be ±10 %. In case the deviation from the expected value is within predefined tolerances the force sensor is considered to operate properly. Otherwise a malfunction of one or more of the force sensor, the pipetting head and pipetting station is assumed. The control unit may execute at least one action in case of an assumed malfunction. For example, the action may comprise checking of the named components. For example, the action may comprise one or more of issuing at least one warning, issuing at least one request e.g. calibration of pipetting head required, perform a retry of determining the deviation, stopping the pipetting device until the force sensor is replaced or serviced, or the like.

The control unit may be configured for executing the action via at least one communication interface and/or user interface. The term "communication interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. The communication interface may be configured for transferring information from a computational device, e.g. a computer, such as to send or output information, e.g. onto another device. Additionally or alternatively, the communication interface may be configured for transferring information onto a computational device, e.g. onto a computer, such as to receive information. The communication interface may specifically provide means for transferring or exchanging information. In particular, the communication interface may provide a data transfer connection, e.g. Bluetooth, NFC, inductive coupling or the like. As an example, the communication interface may be or may comprise at least one port comprising one or more of a network or internet port, a USB-port and a disk drive. The communication interface may be at least one web interface. The term "user interface" as used herein is a broad term and is to be given its ordinary and customary meaning to a person of ordinary skill in the art and is not to be limited to a special or customized meaning. The term may refer, without limitation, to a feature of the laboratory instrument which is configured for interacting with its environment, such as for the purpose of unidirectionally or bidirectionally exchanging information, such as for exchange of one or more of data or commands. For example, the user interface may be configured to share information with a user and to receive information by the user. The user interface may be a feature to interact visually with a user, such as a display, or a feature to interact acoustically with the user. The user interface, as an example, may comprise one or more of a graphical user interface; a data interface, such as a wireless and/or a wire-bound data interface.

Further, according to the invention, a pipetting device comprising a pipetting head configured for being coupled to a plurality of pipetting tips is disclosed. The pipetting device is configured for performing a method for detection of a bottom of at least one well of a multiwell plate according to the present invention. The pipetting device comprises at least one force sensor configured for measuring a resistance force depending on a force on the pipetting tip exerted by the bottom. The pipetting device comprises at least one control unit configured for executing the following steps:
i. measuring the resistance force during movement of one of the pipetting tips from a start position downstream towards the bottom of the well and stopping the movement at a bottom position, wherein the bottom position is a position where a predefined resistance force is reached;
ii. storing the bottom position together with a corresponding logical position of the well in the multiwell plate in at least one database, e.g. of the control unit.

For details, options and definitions, reference may be made to the method as discussed above.

The control unit may be configured for considering the stored bottom position for at least one subsequent pipetting procedure. The control unit may be configured for determining whether a bottom position is available for a logical position in the database, wherein, in case a bottom position is available, the control unit is configured for executing a subsequent pipetting procedure otherwise steps i) to ii) are performed.

In a further aspect, a laboratory instrument for processing and/or analyzing a sample is disclosed. The laboratory instrument comprises at least one pipetting device according to the present invention. The laboratory instrument is one or more of a pre-analytical, an analytical or a post-analytical instrument. For details, options and definitions, reference may be made to the pipetting device and the method as discussed above.

The laboratory instrument may comprise a force control check station. The force control check station may be configured for surveillance of the force sensor. The force control check station may be configured for exerting at least one resistance force on the force sensor generated from at least one mechanical spring. For example, two different forces are applied to the force sensor.

Further disclosed and proposed herein is a computer program including computer-executable instructions for performing the method according to the present invention in one or more of the embodiments enclosed herein when the program is executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps a) to b) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network.

Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

The method and devices according to the present invention may provide a large number of advantages over similar methods and devices known in the art. Specifically, the method may allow saving time, specifically when using several time the same well position as the method may require detecting the bottom of the well only once. A detected bottom position of the well may be stored in the database and may be used for subsequent pipetting procedures. Further, reliability of the force-based measurement may be increased by the use of the force control check station. Thus, a number of force-controlled movements may be minimized. Additionally, the method may allow minimizing a dead volume in the well without potential risk of tip closure at the bottom of the well. Further, it may be possible to apply the bottom detection to one or more functionalities of the laboratory instrument such as to an aspirate, dispense and/or sip and spit procedure.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows embodiments of a laboratory instrument for processing and/or analyzing a sample and of a pipetting device in a schematic view;
- Figure 2: shows a flow chart of an embodiment of a method for detection of a bottom of at least one well of a multiwell plate for a pipetting device;
- Figures 3A and 3B: show a position-time diagram (Figure 3A) and a force-time diagram (Figure 3B);
- Figures 4A to 4D: show different perspective views of an embodiment of a force control check station;
- Figures 5A to 5E: show a procedure at a force control check station in lateral section views; and
- Figure 6: shows a force diagram for a force sensor.

### Detailed description of the embodiments

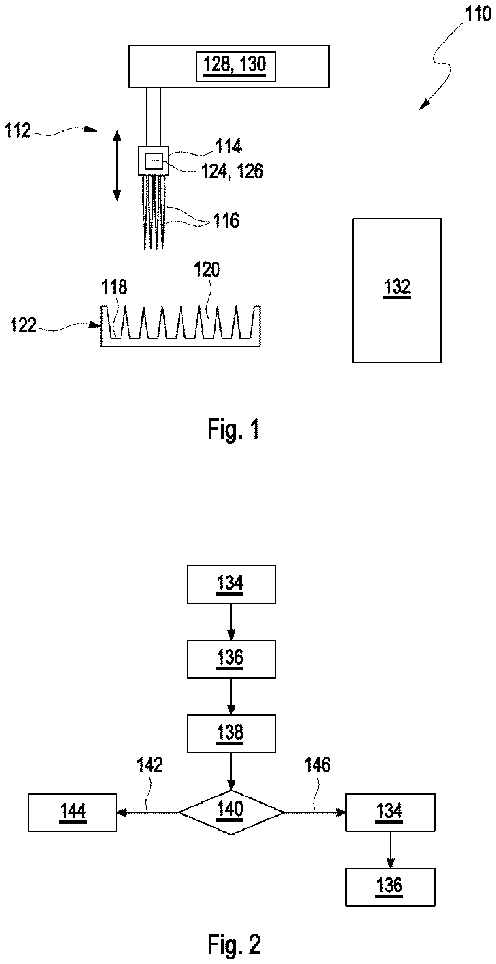

Figure 1 shows exemplary embodiments of a laboratory instrument 110 for processing and/or analyzing a sample and of a pipetting device 112 in a schematic view. The laboratory instrument 110 is one or more of a pre-analytical, an analytical or a post-analytical instrument. The laboratory instrument 110 comprises the at least one pipetting device 112 according to the present invention, for example according to the exemplary embodiment described herein.

The pipetting device 112 comprises a pipetting head 114 configured for being coupled to a plurality of pipetting tips 116. The pipetting device 112 is configured for performing a method for detection of a bottom 118 at least one well 120 of a multiwell plate 122 according to the present invention, such as according to the exemplary embodiment of the method shown in Figure 2.

The pipetting device 112 comprises at least one force sensor 124 configured for measuring a resistance force depending on a force on the pipetting tip 116 exerted by the bottom 118. The force sensor 124 may comprise a load cell 126 configured for generating a sensor signal proportional to the resistance force exerted on the pipetting tip 116. For example, the load cell 126 may be a strain-gauge beam arrangement. As can be seen in Figure 1, the force sensor 124 may be arranged within the pipetting head 114.

Further, the pipetting device 112 comprises at least one control unit 128 configured for executing the following steps:
i. measuring the resistance force during movement of one of the pipetting tips 116 from a start position downstream towards the bottom 118 of the well 120 and stopping the movement at a bottom position, wherein the bottom position is a position where a predefined resistance force is reached;
ii. storing the bottom position together with a corresponding logical position of the well 120 in the multiwell plate 122 in at least one database 130, e.g. of the control unit 128.

The control unit 128 may be configured for considering the stored bottom position for at least one subsequent pipetting procedure. The control unit 128 may be configured for determining whether a bottom position is available for a logical position in the database 130, wherein, in case a bottom position is available, the control unit 128 is configured for executing a subsequent pipetting procedure otherwise steps i) to ii) are performed.

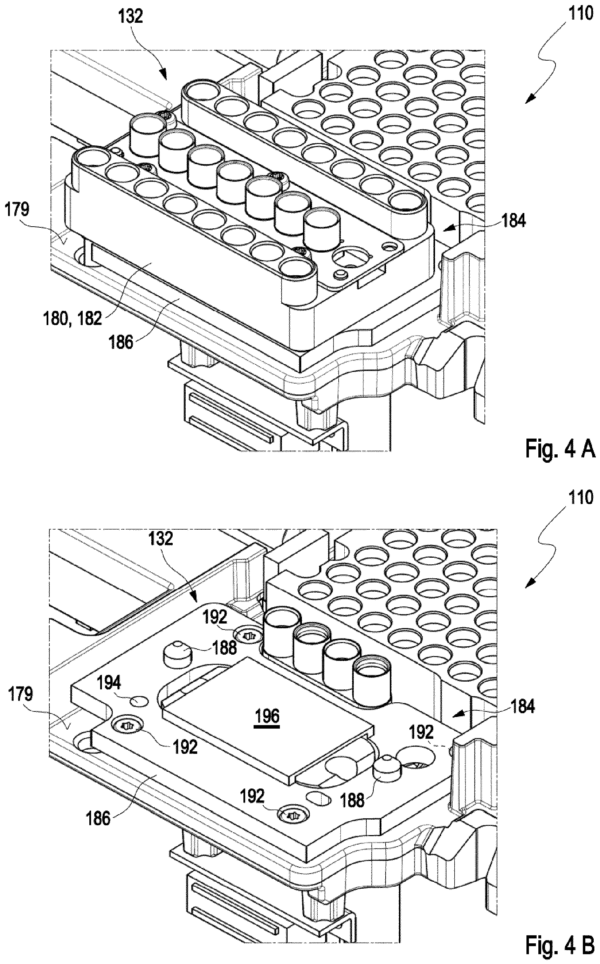

Additionally, the laboratory instrument 110 may comprise a force control check station 132. The force control check station 132 may be configured for surveillance of the force sensor 124. The force control check station 132 may be configured for exerting at least one resistance force on the force sensor 124 generated from at least one mechanical spring. For example, two different forces are applied to the force sensor 124. Exemplary embodiments of the force control check station 132 are described in Figures 4A to 5E in further detail below. Thus, for a description of the force control check station 132, reference is made to the description of Figures 4A to 5E.

In Figure 2, a flow chart of an exemplary embodiment of a method for detection of the bottom 118 of the at least one well 120 of the multiwell plate 122 for the pipetting device 112 is shown. The pipetting device 112 comprises the at least one pipetting head 114 configured for being coupled to the plurality of pipetting tips 116 and may, specifically, be embodied as shown in Figure 1. The method comprises using the at least one force sensor 124 configured for measuring a resistance force depending on a force on the pipetting tip 116 exerted by the bottom 118.

The method steps may be performed in the given order or may be performed in a different order. Further, one or more additional method steps may be present which are not listed. Further, one, more than one or even all of the method steps may be performed repeatedly.

The method comprises the following steps:
a) (denoted by reference number 134) measuring the resistance force during movement of one of the pipetting tips 116 from a start position downstream towards the bottom 118 of the well 120 and stopping the movement at a bottom position, wherein the bottom position is a position where a predefined resistance force is reached;
b) (denoted by reference number 136) storing the bottom position together with a corresponding logical position of the well 120 in the multiwell plate 122 in the at least one database 130.

The method may comprise considering, specifically reusing, the stored bottom position for at least one subsequent pipetting procedure (denoted by reference number 138), e.g. for one or more of subsequent aspiration, dispensing, waste dispensing, sip and spit. The method may comprise determining whether a bottom position is available for a logical position in the database 130 (denoted by reference number 140). In case a bottom position is available (denoted by reference number 142), the method may proceed with a subsequent pipetting procedure (denoted by reference number 144), otherwise (denoted by reference number 146) method steps a) to b) are performed. The detected bottoms for aspirate, and/or sip and spit and/or dispense may be stored and reused. For every new consumable, e.g. new multiwell plate 122 and/or pipetting tip 116, the bottom 118 may be detected again and will be used multiple times until the consumables are changed again. The storing may allow that the bottom position can be reused several times. This may allow saving time, since detecting the bottom 118 is slower then moving directly to a given position. The time saving may be of several seconds per liquid handling operation.

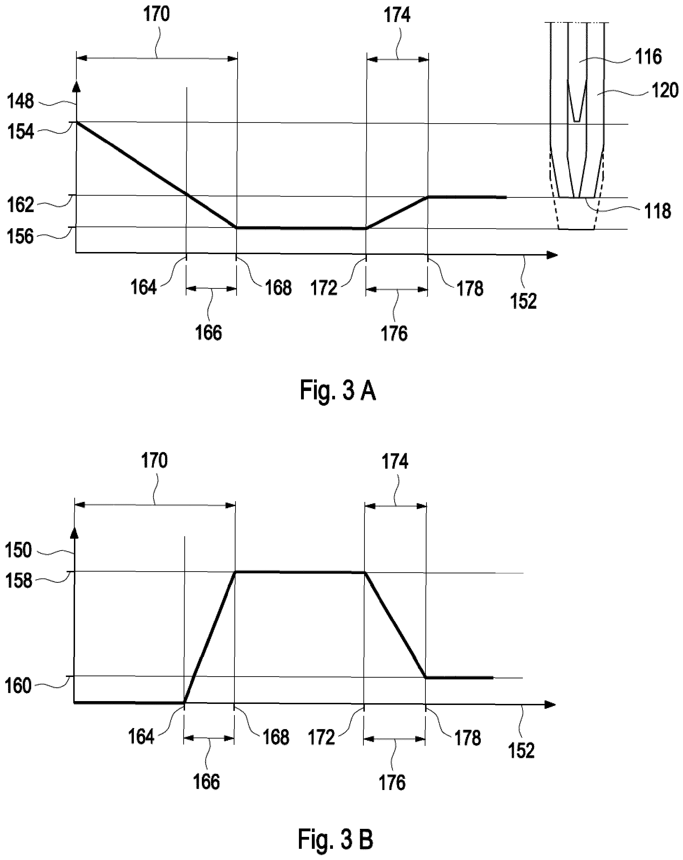

The method may be performed during aspiration, and/or sip and spit, specifically during mixing, and/or dispensing. An example of the method being performed during aspiration and/or sip and spit is shown in Figures 3A and 3B. Figures 3A and 3B show a position-time diagram (Figure 3A) and a force-time diagram (Figure 3B) for the method for detection of the bottom 118 of the at least one well 120 of the multiwell plate 122 for the pipetting device 112. Specifically, a position 148 and the resistance force 150 during movement of one of the pipetting tips 116 are shown as a function of time 152.

As outlined above, the method comprises in step a) measuring the resistance force 150 during movement of one of the pipetting tips 116 from the start position 154 downstream towards the bottom 118 of the well 120 and stopping the movement at the bottom position 156. The bottom position 156 is a position where the predefined resistance force 158 is reached. The predefined resistance force 158, where the movement of the pipetting tip 116 is stopped, may be in the range of from 10 to 120 N, specifically in the range of from 10 to 96 N, more specifically may be 20 N.

Additionally, the method may comprise subsequent to step a) moving the pipetting tip 116 upwards until the resistance force 150 has decreased to a predefined residual force 160 and moving the pipetting tip 116 upwards with a predefined distance to its final position for aspiration and/or sip and spit (not shown in the Figures). Specifically, the pipetting tip 116 having moved upwards until the resistance force 150 has decreased to the predefined residual force 160 may be in a real bottom position 162. The predefined residual force may be in the range of from 1 to 20 N, specifically in the range of from 4 to 10 N. The predefined distance may be an offset. The detected bottom 118 may be stored for future use. The final position may be reached within an imprecision of ±0.25 mm. The proposed method may allow dealing with hardware and consumable intolerances which can be > 1 mm. The proposed method can be advantageous when a residual volume in the well 120 has to be minimized, e.g. < 7 µl. The proposed method may also guarantee that the pipette tip 116 does not touch the bottom 118 and that a tip 116 end remains fully open for liquid operations.

As can be seen in the Figures 3A and 3B, during movement of one of the pipetting tips 116 from the start position 154 downstream towards the bottom 118 of the well 120, the pipetting tip 116 may contact the bottom 118 of the well 120 at a first point in time 164 and the resistance force 150 may start to increase. The pipetting tip 116 and/or the well 120 may be flexing (denoted by reference number 166) until the predefined resistance force 158 is reached at a second point in time 168. This movement of the pipetting tip 116 may be referred to as "increasing force movement" 170. At a third point in time 172, the pipetting tip 116 may be moved upwards until the resistance force 150 has decreased to a predefined residual force 160, specifically being referred to as "decreasing force movement" 174. The pipetting tip 116 and/or the well 120 may be unflexing (denoted by reference number 176) until the predefined residual force 160 is reached at a fourth point in time 178.

The method may comprise surveillance of the force sensor 124. The force sensor 124 may be moved to a defined position where the force sensor 124 experiences at least one resistance force generated from at least one mechanical spring. For example, two different forces may be applied to the force sensor 124. For example, the force sensor 124 may be checked for two different forces, e.g. 27 N and 57 N. The surveillance may comprise checking precision of about +/- 10 N.

As outlined above, the laboratory instrument 110 may comprise the at least one force control check station 132 configured for surveillance of the force sensor 124. Figures 4A to 4D show different perspective views of an exemplary embodiment of the force control check station 132. The force control check station 132 may be configured for exerting at least one resistance force on the force sensor 124 generated from at least one mechanical spring. The force control check station 132 may comprise at least one mechanical spring. For example and as will be outlined in further detail below, the force control check station 132 may comprise a plurality of mechanical springs. For example, the force control check station 132 may comprise a first plurality of mechanical springs having first elastic properties and a second plurality of springs having second elastic properties.

Figure 4A shows a perspective view of the assembled force control check station 132. The force control check station 132 may be fixedly installed in the laboratory instrument 110. The force control check station 132 may be arranged at a fixed position of the laboratory instrument 110. The force control check station 132 may be part of a working surface 179 of the laboratory instrument 110 and/or may be arranged such that it can interact with a specific element of the working surface 179 of the laboratory instrument 110. As can be seen in Figure 4A, instead of plastic tips, a metallic tool 180, also denoted teach tool 182, may be used for surveillance of the force sensor 124.

Figure 4B shows a perspective view of the force control check station 132 without the teach tool 182. In this example, the force control check station 132 may comprise a compartment 184 configured for receiving a mounting plate 186. The mounting plate 186 may have a teach tool support 188 configured for receiving the teach tool 182.

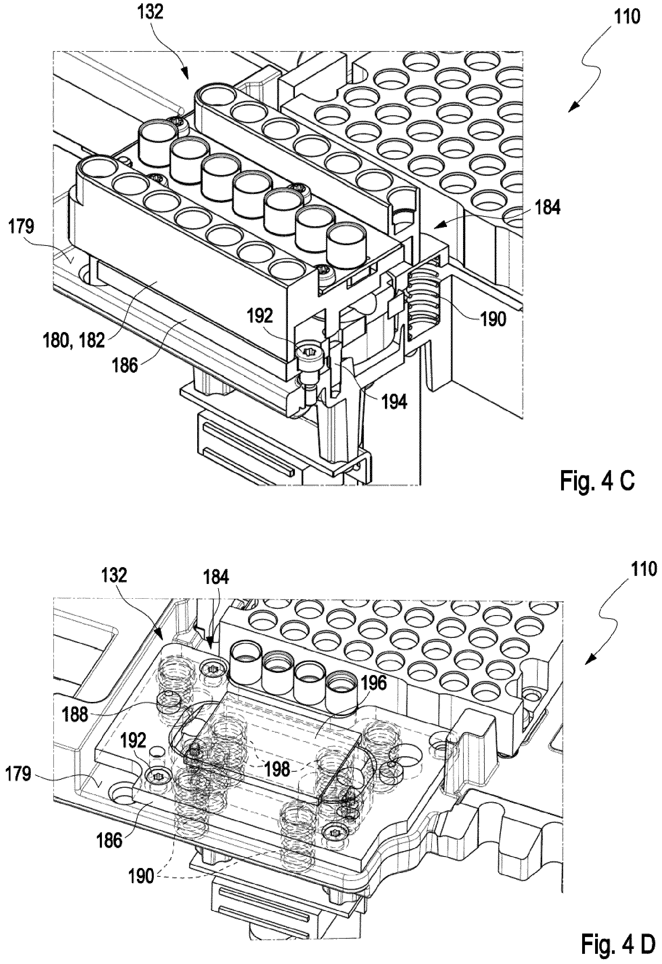

Figure 4C shows a perspective sectional view of the force control station 132. The mounting plate 186 may be spring loaded with respect to the working surface 179. For example, the mounting plate 186 may be spring loaded with respect to the working surface 179 using four mechanical springs 190, as can be seen best in Figure 4D. The mechanical springs 190 may have identical elastic properties. The mechanical springs 190 may be arranged such that uniform force can be exerted to the teach tool 182. Additionally, the mounting surface 186 may be mounted to the working surface 179 via at least one fitting bolt 192, specifically via four fitting bolts 192, and/or via at least one centering pin 194, specifically via two centering pins 194.

Further, the force control check station 132 may comprise a spring loaded intermediate plate 196. Figure 4D shows a perspective view of the intermediate plate 196 of the force control check station 132. The intermediate plate 196 may be spring loaded with respect to the working surface 179 using four further mechanical springs 198. The further mechanical springs 198 may have identical elastic properties. The further mechanical springs 198 may have different elastic properties than the mechanical springs 190 of the mounting plate 186. The further mechanical springs 198 may be arranged such that uniform force can be exerted to the teach tool 182. The intermediate plate 196 may be arranged below the mounting plate 186, e.g. between the working surface 179 and the mounting plate 186. The intermediate plate 196 may be designed such that it becomes effective at a certain distance (depth). Thus, it may be possible to exert at two different distances two different forces to the teach tool 182. Thus, in this example, the mechanical springs 190 may be the first plurality of mechanical springs having first elastic properties and the further mechanical springs 198 may be the second plurality of springs having second elastic properties.

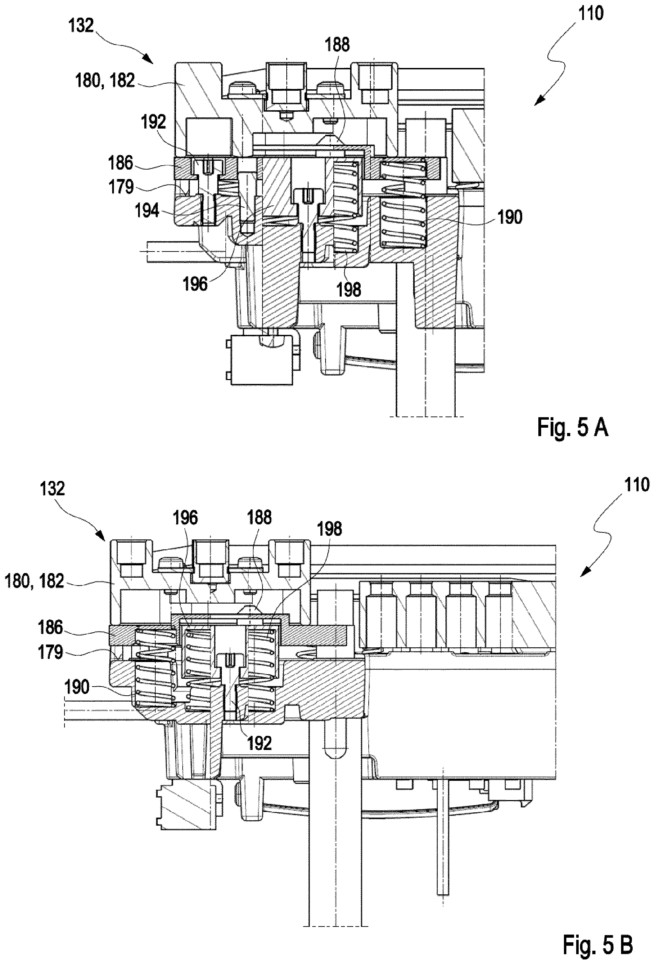

Figures 5A to 5E show a procedure at the force control check station 132 in lateral section views. The force control check station 132 shown in Figures 5A to 5E may correspond to the embodiment of Figures 4A to 4D. Thus, for a description of the force control check station 132, reference is made to the description of Figures 4A to 4D.

As shown in Figure 5A, the teach tool 182 may be placed in the spring loaded mounting plate 186 (parking position). The pipetting head 114 may couple to the teach tool 182. The mechanical springs 190 may be pre-loaded with a load of 22 ± 4 N. The pipetting head 114 may be at a depth value of 0 mm.

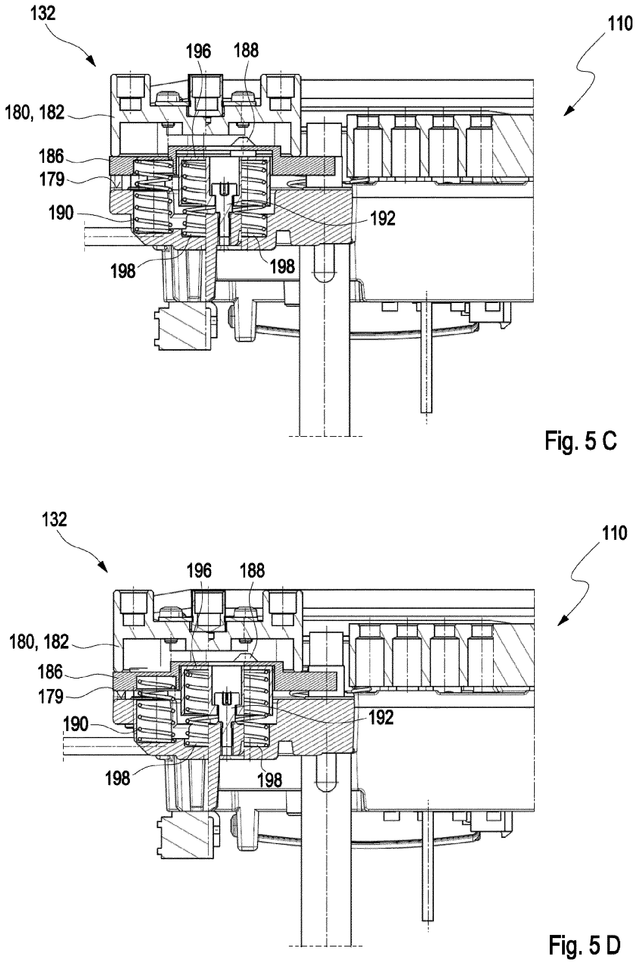

As shown in Figure 5B, the force control check station 132, in particular the pipetting head 114, may approach to at least one first depth value, e.g. -1 mm, such that a resistance force is built up via the mechanical springs 190 of the force control check station 132. The minus sign may denote that the direction of movement is downwards. The force sensor 124 may measure the force. The force in this configuration may, as an example, be 27 ± 6 N. The control unit 128 may compare the measured value to at least one expected value. As can be seen in Figure 5C, the mounting plate 186 may distanced from the intermediate plate 196 at the first depth value of the force control check station 132, for example by 0.5 mm.

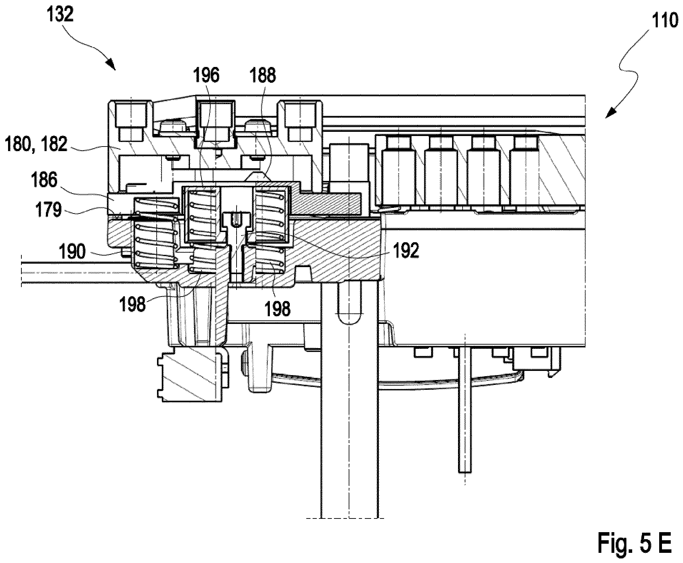

Further, as shown in Figures 5D and 5E, the force control check station 132 may approach at least one second depth value, e.g. -2.5 mm, at which the intermediate plate 196 becomes effective. A force measurement at the depth value of Figure 5D, e.g. at -1.5 mm, where the mounting plate 186 contacts the intermediate plate 196, may be not preferred for tolerance reasons. Thus, the force sensor 124 may measure the force, e.g. at the second depth value of -2.5 mm. The combined force at the second depth value from the mechanical springs 190 and the further mechanical springs 198 may, as an example, be 57 ± 10 N. The teach tool 182 may be distanced from the working surface 179 by e.g. 0.5 mm at the second depth value. The control unit 128 may compare the measured value to at least one expected value.

The force control check station 132 may be configured for providing control points for a force-distance measurement. The pipetting station may be configured for providing a force-distance function for the pipetting head 114, e.g. 100 N with a defined distance, or an additional second defined force N. As outlined above, the surveillance may comprise approaching two different depths thereby exerting two different forces. The control unit 128 may be configured for interpolating a line through a first point (without a force), first depth value and second depth value thereby determining goodness of the curve.

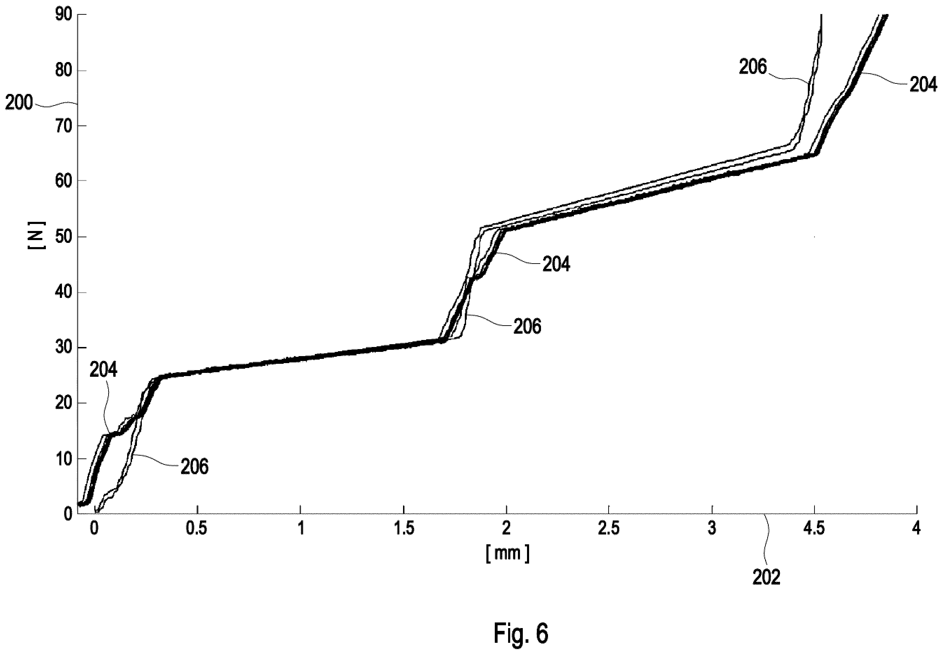

Figure 6 shows a diagram of a force 200 measured with the force sensor 124 as a function of the depth value 202. Specifically, the diagram shows twenty force measurements with the force sensor 124 on the pipetting device 112 (denoted by reference number 204). Additionally, the diagram of Figure 6 shows force measurements by using the force control check station 132 of the laboratory instrument 110 (denoted by reference number 206). The force measurements on the force control check station 132 may be used as reference measurements. Thus, as can be seen in Figure 6, the force measurements 204 with the force sensor 124 on the pipetting device 112 show a high correspondence to the force measurements 206 on the force control check station 132 indicating high accuracy of the force sensor 124 and, thus, of the method for detection of the bottom 118 of the well 120 via force measurements using the force sensor 124.

### List of reference numbers

- 110: laboratory instrument
- 112: pipetting device
- 114: pipetting head
- 116: pipetting tip
- 118: bottom
- 120: well
- 122: multiwell plate
- 124: force sensor
- 126: load cell
- 128: control unit
- 130: database
- 132: force control check station
- 134: measuring the resistance force
- 136: storing the bottom position
- 138: considering the stored bottom position for a subsequent pipetting procedure
- 140: determining whether a bottom position is available
- 142: bottom position is available
- 144: subsequent pipetting procedure
- 146: bottom position is not available
- 148: position
- 150: resistance force
- 152: time
- 154: start position
- 156: bottom position
- 158: predefined resistance force
- 160: predefined residual force
- 162: real bottom position
- 164: first point in time
- 166: pipetting tip and/or well flexing
- 168: second point in time
- 170: increasing force movement
- 172: third point in time
- 174: decreasing force movement
- 176: pipetting tip and/or well unflexing
- 178: fourth point in time
- 179: working surface
- 180: metallic tool
- 182: teach tool
- 184: compartment
- 186: mounting plate
- 188: teach tool support
- 190: mechanical spring
- 192: fitting bolt
- 194: centering pin
- 196: intermediate plate
- 198: further mechanical spring
- 200: force
- 202: depth value
- 204: force measurements on the pipetting device
- 206: force measurements on the force control check station

## Claims

1. A method for detection of a bottom (118) of at least one well (120) of a multiwell plate (122) for a pipetting device (112), wherein the pipetting device (112) comprises at least one pipetting head (114) configured for being coupled to a plurality of pipetting tips (116), wherein the method comprises using at least one force sensor (124) configured for measuring a resistance force (150) depending on a force on a pipetting tip (116) exerted by the bottom (118), wherein the method comprises the following step:
a) measuring the resistance (150) force during movement of one of the pipetting tips (116) from a start position (154) downstream towards the bottom (118) of the well (120) and stopping the movement at a bottom position (156), wherein the bottom position (156) is a position where a predefined resistance force (158) is reached; and wherein the method is **characterised by** further comprising the following step:
b) storing the bottom position (156) together with a corresponding logical position of the well (120) in the multiwell plate (122) in at least one database (130).

2. The method according to the preceding claim, wherein the method comprises considering the stored bottom position (156) for at least one subsequent pipetting procedure.

3. The method according to the preceding claim, wherein the method comprises determining whether a bottom position (156) is available for a logical position in the database (130), wherein, in case a bottom position (156) is available, the method proceeds with a subsequent pipetting procedure otherwise method steps a) to b) are performed.

4. The method according to any one of the preceding claims, wherein steps a) and b) are repeated in case of new consumables and/or new pipetting tips (116).

5. The method according to any one of the preceding claims, wherein the force sensor (124) comprises a load cell (126) configured for generating a sensor signal proportional to the resistance force (150) exerted on the pipetting tip (116).

6. The method according to any one of the preceding claims, wherein the method is performed during aspiration, and/or sip and spit and/or dispensing.

7. The method according to any one of the preceding claims, wherein the method is performed during aspiration and/or sip and spit, wherein the method further comprises subsequent to step a) moving the pipetting tip (116) upwards until the resistance force (150) has decreased to a predefined residual force (160) and moving the pipetting tip (116) upwards with a predefined distance to its final position for aspiration and/or sip and spit.

8. The method according to any one of the preceding claims, wherein the method comprises surveillance of the force sensor (124), wherein the force sensor (124) is moved to a defined position where the force sensor (124) experiences at least one resistance force generated from at least one mechanical spring.

9. The method according to the preceding claim, wherein two different forces are applied to the force sensor (124).

10. Pipetting device (112) comprising a pipetting head (114) configured for being coupled to a plurality of pipetting tips (116), wherein the pipetting device (112) is configured for performing a method for detection of a bottom (118) of at least one well (120) of a multiwell plate (122) according to any one of the preceding claims, wherein the pipetting device (112) comprises at least one force sensor (124) configured for measuring a resistance force (150) depending on a force on the pipetting tip (116) exerted by the bottom (118), wherein the pipetting device (112) comprises at least one control unit (128) configured for executing the following steps:
i. measuring the resistance force (150) during movement of one of the pipetting tips (116) from a start position (154) downstream towards the bottom (118) of the well (120) and stopping the movement at a bottom position (156), wherein the bottom position (156) is a position where a predefined resistance force (158) is reached;
ii. storing the bottom position (156) together with a corresponding logical position of the well (120) in the multiwell plate (122) in at least one database (130).

11. The pipetting device (112) according to the preceding claim, wherein the control unit (128) is configured for considering the stored bottom position (156) for at least one subsequent pipetting procedure.

12. The pipetting device (112) according to the preceding claim, wherein the control unit (128) is configured for determining whether a bottom position (156) is available for a logical position in the database (130), wherein, in case a bottom position (156) is available, the control unit (128) is configured for executing a subsequent pipetting procedure, otherwise steps i) to ii) are performed.

13. A laboratory instrument (110) for processing and/or analyzing a sample, wherein the laboratory instrument (110) comprises at least one pipetting device (112) according to any one of the preceding claims 10-12, wherein the laboratory instrument (110) is one or more of a pre-analytical, an analytical or a post-analytical instrument.

14. The laboratory instrument (110) according to the preceding claim, wherein the laboratory instrument (110) comprises a force control check station (132), wherein the force control check station (132) is configured for surveillance of the force sensor (124), wherein the force control check station (132) is configured for exerting at least one resistance force (150) on the force sensor (124) generated from at least one mechanical spring.

15. The laboratory instrument (110) according to the preceding claim, wherein two different forces are applied to the force sensor (124).

## Patentansprüche

1. Verfahren zur Detektion eines Bodens (118) mindestens eines Wells (120) einer Mikrotiterplatte (122) für eine Pipettiervorrichtung (112), wobei die Pipettiervorrichtung (112) mindestens einen Pipettierkopf (114) umfasst, der zum Koppeln an eine Vielzahl von Pipettierspitzen (116) ausgebildet ist, wobei das Verfahren das Verwenden mindestens eines Kraftsensors (124) umfasst, der zum Messen einer Widerstandskraft (150) in Abhängigkeit von einer Kraft an einer Pipettierspitze (116), die von dem Boden (118) ausgeübt wird, ausgebildet ist, wobei das Verfahren den folgenden Schritt umfasst:
a) Messen der Widerstandskraft (150) während der Bewegung einer der Pipettierspitzen (116) aus einer Startposition (154) abwärts in Richtung des Bodens (118) des Wells (120) und Stoppen der Bewegung an einer Bodenposition (156), wobei die Bodenposition (156) eine Position ist, in der eine vordefinierte Widerstandskraft (158) erreicht wird; und wobei das Verfahren **dadurch gekennzeichnet ist, dass** es ferner den folgenden Schritt umfasst:
b) Speichern der Bodenposition (156) zusammen mit einer entsprechenden logischen Position des Wells (120) in der Mikrotiterplatte (122) in mindestens einer Datenbank (130).

2. Verfahren nach dem vorstehenden Anspruch, wobei das Verfahren das Berücksichtigen der gespeicherten Bodenposition (156) für mindestens eine nachfolgende Pipettierprozedur umfasst.

3. Verfahren nach dem vorstehenden Anspruch, wobei das Verfahren das Bestimmen, ob eine Bodenposition (156) für eine logische Position in der Datenbank (130) verfügbar ist, umfasst, wobei, wenn eine Bodenposition (156) verfügbar ist, das Verfahren mit einer nachfolgenden Pipettierprozedur fortfährt, anderenfalls die Verfahrensschritte a) bis b) ausgeführt werden.

4. Verfahren nach einem der vorstehenden Ansprüche, wobei die Schritte a) und b) im Falle neuer Verbrauchsmaterialien und/oder neuer Pipettierspitzen (116) wiederholt werden.

5. Verfahren nach einem der vorstehenden Ansprüche, wobei der Kraftsensor (124) eine Kraftmesszelle (126) umfasst, die zum Erzeugen eines Sensorsignals proportional zu der Widerstandskraft (150), die auf die Pipettierspitze (116) ausgeübt wird, ausgebildet ist.

6. Verfahren nach einem der vorstehenden Ansprüche, wobei das Verfahren während des Ansaugens und/oder langsamen Aufnehmens und Abgebens und/oder Verteilens ausgeführt wird.

7. Verfahren nach einem der vorstehenden Ansprüche, wobei das Verfahren während des Ansaugens und/oder langsamen Aufnehmens und Abgebens ausgeführt wird, wobei das Verfahren ferner nach Schritt a) das Bewegen der Pipettierspitze (116) aufwärts, bis die Widerstandskraft (150) auf eine vordefinierte Restkraft (160) gesenkt ist, und das Bewegen der Pipettierspitze (116) aufwärts mit einem vordefinierten Abstand zu ihrer Endposition zum Ansaugen und/oder langsamen Aufnehmen und Abgeben umfasst.

8. Verfahren nach einem der vorstehenden Ansprüche, wobei das Verfahren die Überwachung des Kraftsensors (124) umfasst, wobei der Kraftsensor (124) in eine definierte Position bewegt wird, in der der Kraftsensor (124) mindestens eine von mindestens einer mechanischen Feder erzeugte Widerstandskraft erfährt.

9. Verfahren nach dem vorstehenden Anspruch, wobei zwei verschiedene Kräfte auf den Kraftsensor (124) ausgeübt werden.

10. Pipettiervorrichtung (112), umfassend einen Pipettierkopf (114), der zum Koppeln mit einer Vielzahl von Pipettierspitzen (116) ausgebildet ist, wobei die Pipettiervorrichtung (112) zum Ausführen eines Verfahrens zur Detektion eines Bodens (118) mindestens eines Wells (120) einer Mikrotiterplatte (122) nach einem der vorstehenden Ansprüche ausgebildet ist, wobei die Pipettiervorrichtung (112) mindestens einen Kraftsensor (124) umfasst, der zum Messen einer Widerstandskraft (150) in Abhängigkeit von einer Kraft an der Pipettierspitze (116), die von dem Boden (118) ausgeübt wird, ausgebildet ist, wobei die Pipettiervorrichtung (112) mindestens eine Steuerungseinheit (128) umfasst, die zum Ausführen der folgenden Schritte ausgebildet ist:
i. Messen der Widerstandskraft (150) während der Bewegung einer der Pipettierspitzen (116) aus einer Startposition (154) abwärts in Richtung des Bodens (118) des Wells (120) und Stoppen der Bewegung an einer Bodenposition (156), wobei die Bodenposition (156) eine Position ist, in der eine vordefinierte Widerstandskraft (158) erreicht wird;
ii. Speichern der Bodenposition (156) zusammen mit einer entsprechenden logischen Position des Wells (120) in der Mikrotiterplatte (122) in mindestens einer Datenbank (130).

11. Pipettiervorrichtung (112) nach dem vorstehenden Anspruch, wobei die Steuerungseinheit (128) zum Berücksichtigen der gespeicherten Bodenposition (156) für mindestens eine nachfolgende Pipettierprozedur ausgebildet ist.

12. Pipettiervorrichtung (112) nach dem vorstehenden Anspruch, wobei die Steuerungseinheit (128) zum Bestimmen, ob eine Bodenposition (156) für eine logische Position in der Datenbank (130) verfügbar ist, ausgebildet ist, wobei, wenn eine Bodenposition (156) verfügbar ist, die Steuerungseinheit (128) zum Ausführen einer nachfolgenden Pipettierprozedur ausgebildet ist, anderenfalls die Schritte i) bis ii) ausgeführt werden.

13. Laborinstrument (110) zum Verarbeiten und/oder Analysieren einer Probe, wobei das Laborinstrument (110) mindestens eine Pipettiervorrichtung (112) nach einem der vorstehenden Ansprüche 10-12 umfasst, wobei das Laborinstrument (110) eines oder mehrere von einem Voranalyse-, einem Analyse- oder einem Nachanalyseinstrument ist.

14. Laborinstrument (110) nach dem vorstehenden Anspruch, wobei das Laborinstrument (110) eine Kraftsteuerungsprüfstation (132) umfasst, wobei die Kraftsteuerungsprüfstation (132) zum Überwachen des Kraftsensors (124) ausgebildet ist, wobei die Kraftsteuerungsprüfstation (132) zum Ausüben mindestens einer Widerstandskraft (150) auf den Kraftsensor (124), die von mindestens einer mechanischen Feder erzeugt wird, ausgebildet ist.

15. Laborinstrument (110) nach dem vorstehenden Anspruch, wobei zwei verschiedene Kräfte auf den Kraftsensor (124) ausgeübt werden.

## Revendications

1. Procédé de détection d'un fond (118) d'au moins un puits (120) d'une plaque multi-puits (122) pour un dispositif de pipetage (112), dans lequel le dispositif de pipetage (112) comprend au moins une tête de pipetage (114) conçue pour être accouplée à une pluralité d'embouts de pipetage (116), dans lequel le procédé comprend l'utilisation d'au moins un capteur de force (124) conçu pour mesurer une force de résistance (150) en fonction d'une force sur un embout de pipetage (116) exercée par le fond (118), dans lequel le procédé comprend l'étape suivante :
a) la mesure de la force de résistance (150) pendant le mouvement de l'un des embouts de pipetage (116) à partir d'une position de départ (154) en aval vers le fond (118) du puits (120) et l'arrêt du mouvement au niveau d'une position de fond (156), dans lequel la position de fond (156) est une position dans laquelle une force de résistance prédéfinie (158) est atteinte ; et dans lequel le procédé est **caractérisé en ce qu'**il comprend en outre l'étape suivante :
b) le stockage de la position de fond (156) conjointement avec une position logique correspondante du puits (120) dans la plaque multi-puits (122) dans au moins une base de données (130).

2. Procédé selon la revendication précédente, dans lequel le procédé comprend la considération de la position de fond (156) stockée pour au moins une procédure de pipetage suivante.

3. Procédé selon la revendication précédente, dans lequel le procédé comprend la détermination si une position de fond (156) est disponible pour une position logique dans la base de données (130), dans lequel, au cas où une position de fond (156) est disponible, le procédé se poursuit par une procédure de pipetage suivante, sinon les étapes a) à b) du procédé sont réalisées.

4. Procédé selon l'une quelconque des revendications précédentes, dans lequel les étapes a) et b) sont répétées en cas de nouveaux consommables et/ou de nouveaux embouts de pipetage (116).

5. Procédé selon l'une quelconque des revendications précédentes, dans lequel le capteur de force (124) comprend une cellule de charge (126) conçue pour générer un signal de capteur proportionnel à la force de résistance (150) exercée sur l'embout de pipetage (116).

6. Procédé selon l'une quelconque des revendications précédentes, dans lequel le procédé est réalisé pendant l'aspiration, et/ou l'aspiration et la distribution et/ou la distribution.

7. Procédé selon l'une quelconque des revendications précédentes, dans lequel le procédé est réalisé pendant l'aspiration, et/ou l'aspiration et la distribution, dans lequel le procédé comprend en outre, à la suite de l'étape a), le mouvement de l'embout de pipetage (116) vers le haut jusqu'à ce que la force de résistance (150) ait diminué jusqu'à une force résiduelle (160) prédéfinie et le mouvement de l'embout de pipetage (116) vers le haut avec une distance prédéfinie jusqu'à sa position finale pour l'aspiration et/ou l'aspiration et la distribution.

8. Procédé selon l'une quelconque des revendications précédentes, dans lequel le procédé comprend la surveillance du capteur de force (124), dans lequel le capteur de force (124) est déplacé vers une position définie dans laquelle le capteur de force (124) subit au moins une force de résistance générée à partir d'au moins un ressort mécanique.

9. Procédé selon la revendication précédente, dans lequel deux forces différentes sont appliquées au capteur de force (124).

10. Dispositif de pipetage (112) comprenant une tête de pipetage (114) conçue pour être accouplée à une pluralité d'embouts de pipetage (116), dans lequel le dispositif de pipetage (112) est conçu pour réaliser un procédé de détection d'un fond (118) d'au moins un puits (120) d'une plaque multi-puits (122) selon l'une quelconque des revendications précédentes, dans lequel le dispositif de pipetage (112) comprend au moins un capteur de force (124) conçu pour mesurer une force de résistance (150) en fonction d'une force sur l'embout de pipetage (116) exercée par le fond (118), dans lequel le dispositif de pipetage (112) comprend au moins une unité de commande (128) conçue pour exécuter les étapes suivantes :
i. la mesure de la force de résistance (150) pendant le mouvement de l'un des embouts de pipetage (116) à partir d'une position de départ (154) en aval vers le fond (118) du puits (120) et l'arrêt du mouvement au niveau d'une position de fond (156), dans lequel la position de fond (156) est une position dans laquelle une force de résistance prédéfinie (158) est atteinte ;
ii. le stockage de la position de fond (156) conjointement avec une position logique correspondante du puits (120) dans la plaque multi-puits (122) dans au moins une base de données (130).

11. Dispositif de pipetage (112) selon la revendication précédente, dans lequel l'unité de commande (128) est conçue pour considérer la position de fond (156) stockée pour au moins une procédure de pipetage suivante.

12. Dispositif de pipetage (112) selon la revendication précédente, dans lequel l'unité de commande (128) est conçue pour déterminer si une position de fond (156) est disponible pour une position logique dans la base de données (130), dans lequel, au cas où une position de fond (156) est disponible, l'unité de commande (128) est conçue pour exécuter une procédure de pipetage suivante, sinon les étapes i) à ii) sont réalisées.

13. Instrument de laboratoire (110) pour traiter et/ou analyser un échantillon, dans lequel l'instrument de laboratoire (110) comprend au moins un dispositif de pipetage (112) selon l'une quelconque des revendications 10 à 12 précédentes, dans lequel l'instrument de laboratoire (110) est un ou plusieurs parmi un instrument pré-analytique, un instrument analytique ou un instrument post-analytique.

14. Instrument de laboratoire (110) selon la revendication précédente, dans lequel l'instrument de laboratoire (110) comprend une station de vérification de commande de force (132), dans lequel la station de vérification de commande de force (132) est conçue pour la surveillance du capteur de force (124), dans lequel la station de vérification de commande de force (132) est conçue pour exercer au moins une force de résistance (150) sur le capteur de force (124) générée à partir d'au moins un ressort mécanique.

15. Instrument de laboratoire (110) selon la revendication précédente, dans lequel deux forces différentes sont appliquées au capteur de force (124).
